# FASCICULE DE BREVET EUROPEEN

(11) **EP 0 455 523 B1**
(45) Date de publication et mention de la délivrance du brevet: **07.06.1995**
(21) Numéro de dépôt: 91400800.8
(22) Date de dépôt: 26.03.1991
(51) Int. Cl.: B25J 19/00, B23Q 1/00

(54) **Dispositif permettant le maintien et/ou l'assemblage automatique de pièces comportant des bras porte-outils montés sur un bloc support**
Vorrichtung zum Halten und/oder automatischen Zusammenbauen von Teilen mit werkzeugtragenden Armen, montiert auf einer Unterlage
Device permitting the holding and/or the automatic assembling of pieces, having tool bearing arms mounted on a support block

(30) Priorité: 04.05.1990 FR 9005678
(43) Date de publication de la demande: 06.11.1991
(73) Titulaire: REGIE NATIONALE DES USINES RENAULT S.A., 92109 Boulogne Billancourt (FR)
(72) Inventeur: Peyroux, Jean-Daniel, F-92190 - Meudon (FR)
(74) Mandataire: Ernst-Schonberg, Michel

(56) Documents cités:
- EP-A- 0 265 835
- WO-A-87/04653
- JP-A-53 034 268
- US-A- 4 721 029

## Description

L'invention concerne un bloc support de bras de robot porte-outil notamment pour lignes d'assemblage de pièces de tôlerie conforme au préambule de la revendication.

La publication WO-A-8704653 (état de la technique le plus proche) décrit un bloc support d'outil d'un bras de robot à l'intérieur duquel sont disposés des tronçons de lignes électriques, des circuits de puissance et de commande et qui possède des ouvertures munies de plaques de recouvrement équipées de raccords électriques d'éléments de commande d'un bloc électronique de contrôle de la commande et des raccords d'alimentation en fluide.

La publication US-A-4721029 décrit un bloc d'alimentation d'outils à commande hydraulique équipé de raccords de branchement rapide des tuyauteries d'arrivée et de départ de fluide.

La publication EP-A-0265835 décrit une construction assemblée d'un bras support de conduits d'alimentation hydraulique ou pneumatique.

Contrairement à l'état de la technique précité suivant lequel le support porte un ensemble électronique pour piloter un bras porte-outil unique, l'invention a pour objet un bloc support sur lequel est fixé l'ensemble piloté des bras porte-outil et qui possède des circuits de puissance et de commande dudit ensemble des bras pilotés par un bloc distributeur fluidique monté sur le support. Ce bloc distributeur permet l'alimentation d'un ou de plusieurs bras en fonction des différentes instructions données par un ensemble électronique extérieur.

Le bloc support réalisé conformément aux caractéristiques de la revendication peut faire l'objet de multiples applications.

Il peut notamment :
- être fixé sur un pied fixe par rapport au sol;
- être fixé sur un type quelconque de manipulateur ou extracteur, pour la manutention des pièces de tôlerie de tous types, sur les lignes de presse ou sur les lignes d'assemblage,
- servir de gabarit de contrôle pour les montages d'assemblage,
- servir de support sur lequel on positionne différentes pièces dans le but d'assurer leur assemblage mutuel ou leur assemblage sur une autre pièce,
- être associé à un ou plusieurs outils (ventouse, pince de serrage, pince à souder, pistolet d'encollage, de soudage de goujons ou d'écrous, de ragréage, etc.),
- porter des pièces maintenues référencées géométriquement par rapport à ces propres références géométriques,
- peut être équipé d'un séquenceur de fonction (serrage, desserrage, soudage, perçage, etc.),
- s'accoupler automatiquement sur son support (fixe ou manipulateur),
- s'accoupler automatiquement avec des éléments annexes modulaires (porte-outils, porte-éléments de serrage, etc.),
- être équipé avec des dispositifs d'émission et de réception d'informations liés à l'armoire de commande,
- être identifiable automatiquement.

Le bloc-support ainsi réalisé permet notamment une simplification des circuits de commande et de puissance.

Les circuits de commande sont des circuits électriques assurant la commande des tiroirs du ou des distributeurs.

Les circuits de puissance et les circuits de commande sont raccordés à des tuyauteries externes par au moins une prise débrochable fixée sur le bloc-support.

La ou les prises débrochables sont fixées sur la périphérie du bloc-support, entre deux bras.

De préférence, ce dispositif comporte une plaque installée entre le bloc-support et le ou les distributeurs, cette plaque comportant des canaux internes qui constituent une partie des circuits fluidiques de puissance.

Cette plaque comporte un bornier électrique assurant le raccordement interne au bloc-support des circuits électriques commandant les tiroirs du ou des distributeurs.

Chaque bras comporte des orifices internes qui constituent une partie des circuits fluidiques de puissance.

Chaque bras comporte un orifice central dans lequel sont installée des liaisons électriques, et/ou des alvéoles externes, dans lesquelles sont installées des liaisons électriques, toutes ces liaisons électriques constituant une partie des circuits électriques de commande.

Il est décrit ci-après, à titre d'exemple et en référence aux dessins annexés, un dispositif d'assemblage selon l'invention.
La figure 1 montre une vue de dessus du dispositif selon l'invention, montrant au moins un outil;
la figure 2 montre une vue selon II de la figure 1, l'outil ayant été retiré;
la figure 3 montre une vue schmématique et éclatée de la figure 2;
la figure 4 montre une coupe d'un bras selon IV de la figure 3.

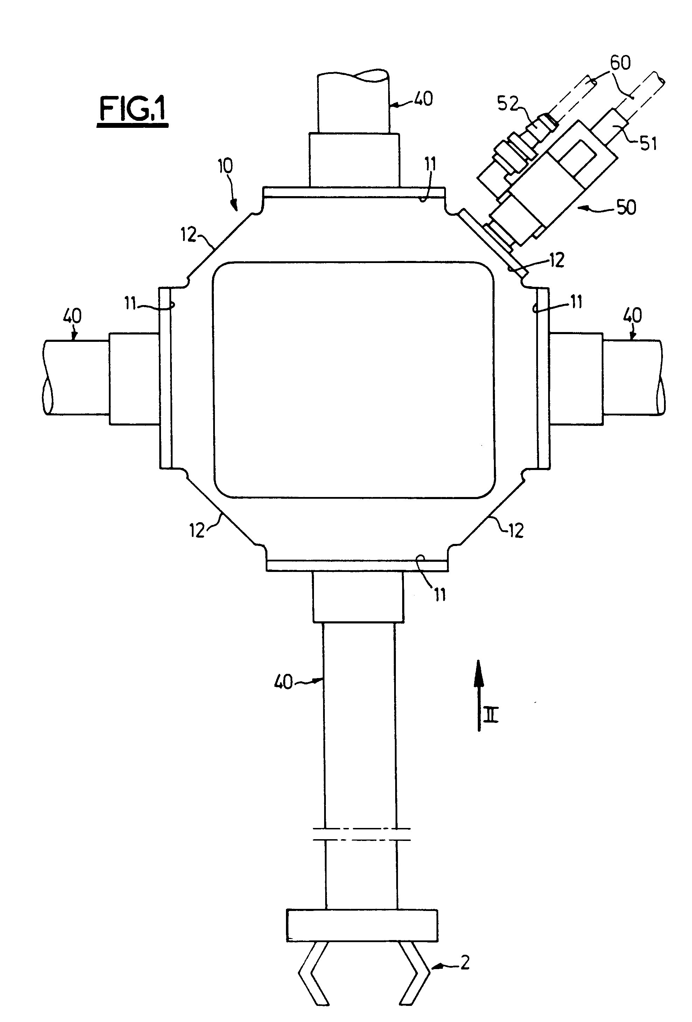

Sur la figure 1 est représenté un bloc-support 10 qui comporte quatre faces 11 sur chacune desquelles est positionné un bras 40, et quatre faces 12 sur chacune desquelles est positionnée une prise débrochable 50, une seule de ces prises étant représentée. Un bras 40 est muni d'un outil 2 qui est, dans ce cas, une pince. Les autres outils, installés aux extrémités des autres bras 40, ne sont pas représentés. La prise débrochable 50 est alimentée de l'extérieur par des tuyauteries 60. Cette prise 50 comporte, par exemple, une prise 51 qui est une arrivée électrique et une prise 52 qui est une arrivée fluidique.

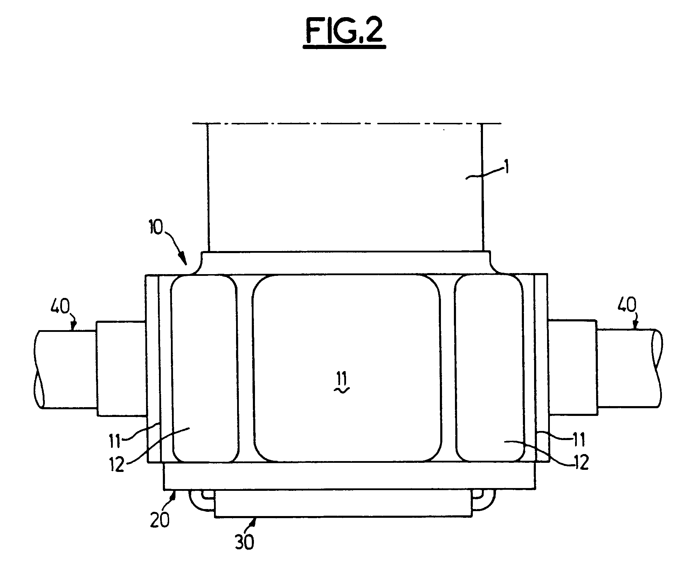

Sur la figure 2 sont représentés le bloc-support 10 muni de deux bras porte-outils 40, d'une plaque 20 et d'un distributeur 30. La plaque 20 est une plaque de distribution fluidique et le distributeur 30 est fixé sur cette plaque de distribution.

Le dispositif est monté à l'extrémité d'une colonne 1 fixe . Bien entendu, ce dispositif pourrait être monté sur une tête mobile telle qu'une tête d'un automate.

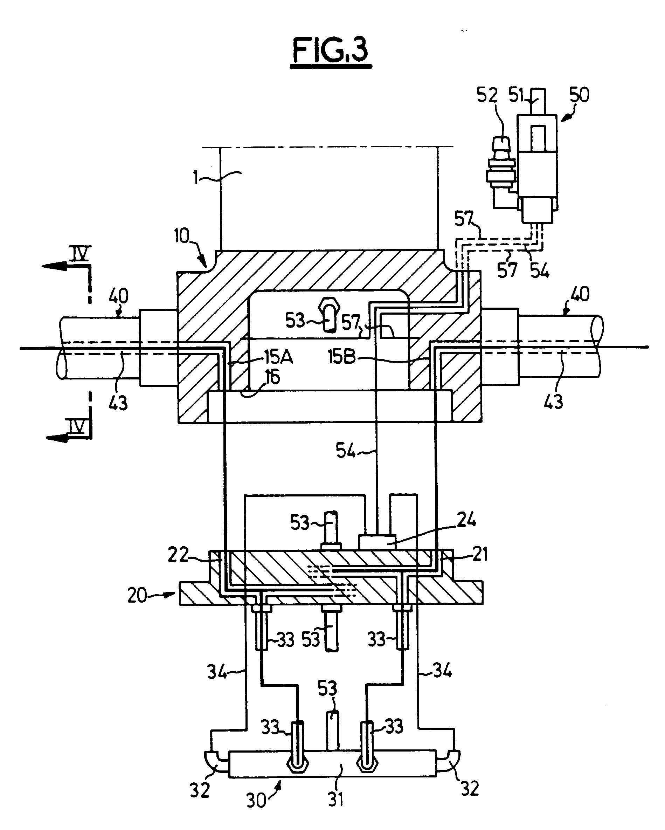

La figure 3 montre une vue éclatée de la figure 2, dans laquelle sont également représentés la colonne 1, le bloc-support 10, la plaque 20, le distributeur 30, ainsi que deux bras 40.

Cette figure montre également, de manière schématique, une prise débrochable 50 comportant une prise électrique 51 et une prise fluidique 52.

Le bloc-support 10 est conçu de façon robuste et indéformable, car il porte les bras.

En ce qui concerne les circuits fluidiques, ce bloc 10 est traversé par une canalisation 53 reliée à la prise 52, puis il comporte des orifices 15a, 15b permettant l'alimentation en fluide des bras.

La plaque 20, installée dans l'alésage 16 du bloc 10, comporte des canalisations 21, 22 assurant la distribution du fluide. Cette plaque 20 est traversée par la canalisation 53 qui alimente directement le distributeur 30. Cette plaque 20 comporte des canaux internes qui constituent une sorte de "circuit imprimés". Cette plaque peut être obtenue par exemple par collage de plusieurs couches (suivant le nombre de séquences) comportant des usinages, ces usinages constituant les canaux. Le circuit imprimé estchoisi en fonction des outils et des fonctions que l'on veut donner à ces outils. La plaque est interchangeable et la modularité du dispositif est ainsi assurée.

Le distributeur 30 comporte un corps central 31 muni de tiroirs et deux canalisations 33 assurant l'alimentation de la plaque 20.

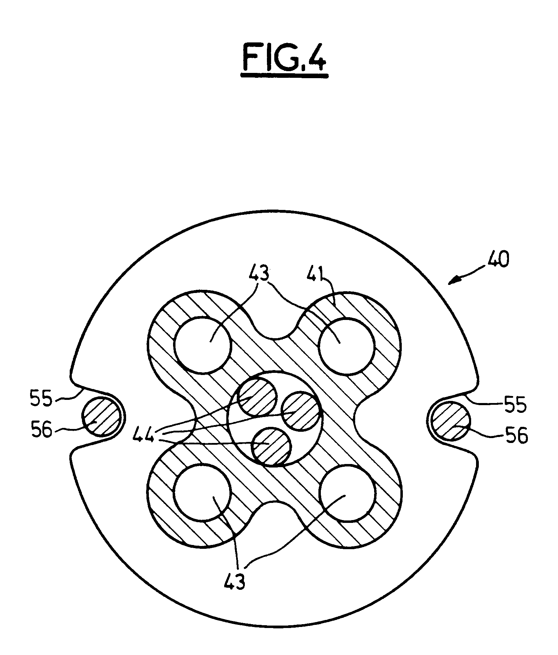

Chaque bras comporte, comme cela est visible en figure 4, quatre canalisations internes 43 assurant la transmission du fluide.

En ce qui concerne les circuits électriques, une liaison électrique 54 provenant de la prise 51 traverse le bloc 10 et est reliée sur un bornier 24 de la plaque 20. Les liaisons électriques 34 relient le bornier 24 aux bornes électriques 32 du distributeur 30. Chaque bras comporte, comme cela est visible en figure 4, un orifice central 42 dans lequel passent trois liaisons électriques 44 et dans des alvéoles externes 55, deux liaisons électriques 56.

Ces liaisons électriques 44 et 56, qui font partie du circuit électrique de commande, sont reliées à à une extrémité, à une liaison électrique 57 raccordée à la prise électrique 51 et, à l'autre extrémité, à des capteurs ou à des moteurs installés à l'extrémité des bras, près des outils.

## Revendications

1. Bloc support (10) de bras de robot porte-outil notamment pour lignes d'assemblage de pièces de tôlerie sur lequel au moins un bras (40) porte outil est fixé audit bloc support avec au moins un distributeur (30) fluidique et des circuits électriques de puissance et de commande de ce distributeur (30), caractérisé par le fait que le distributeur fluidique (30) est fixé sur une plaque (20) par laquelle la canalisation (53) du circuit fluidique de puissance et des canalisations (21, 22) de distribution du fluide sont respectivement raccordées à une première partie des circuits de puissance et de commande des bras (40) intégrée dans le bloc support (10) dont l'autre partie des circuits se prolonge dans lesdits bras (40).

2. Bloc support selon la revendication 1, caractérisé en ce que les circuits fluidiques de puissance et les circuits électriques de commande sont raccordés à des tuyauteries externes (60) par au moins une prise débrochable (50) fixée sur le bloc-support (10).

3. Bloc support selon la revendication 2, caractérisé en ce que la plaque (20) comporte un bornier électrique (24) assurant le raccordement interne au bloc support, des circuits électriques commandant les tiroirs du ou des distributeurs.

4. Bloc support d'assemblage selon l'une des revendications précédentes, caractérisé en ce que chaque bras (40) comporte :
- des orifices internes (43) qui constituent une partie des circuits fluidiques de puissance,
- un orifice central (42) dans lequel sont installées des liaisons électriques (44) constituant une partie des circuits électriques de commande,
- et des alvéoles externes (55) dans lesquelles sont installées des liaisons électriques (56) constituant une partie des circuits électriques de commande.

## Claims

1. Carrying module for tool-carrying robot arms, particularly for assembly lines for platework articles, on which at least one tool-carrying arm (40) is fixed to said carrying module, with at least one fluid distributor (30) and electrical power and control circuits for this distributor (30), characterised by the fact that the fluid distributor (30) is fixed onto a plate (20) by means of which the channels (53) of the fluid power circuit and channels (21, 22) for distribution of the fluid are respectively connected to a first part of the power and control circuits of the arms (40), integrated in the carrying module (10), the other part of the circuits of which extends into said arms (40).

2. Carrying module according to claim 1, characterised in that the fluid power circuits and the electrical control circuits are connected to external pipelines (60) by at least one plug-in connector (50) fixed onto the carrying module (10).

3. Carrying module according claim 2, characterised in that the plate (20) comprises an electrical terminal block (24) ensuring internal connection of the electrical circuits controlling the slide valves of the distributor or distributors to the carrying module.

4. Carrying module for assembly work according to one of the previous claims, characterised in that each arm (40) comprises:
- internal openings (43) which constitute a part of the fluid and power circuits,
- a central opening (42) in which electrical connections (44) are mounted, constituting a part of the electrical control circuits,
- and external female connectors (55) in which electrical connections (56) are mounted, forming a part of the electrical control circuits.

## Patentansprüche

1. Unterlage (10) für einen werkzeugtragenden Roboterarm, insbesondere für Blechteil-Montagebänder, wobei wenigstens ein werkzeugtragender Arm (40) an der Unterlage befestigt ist, mit wenigstens einem Fluidverteiler (30), sowie mit elektrischen Versorgungs- und Steuerleitungen für diese Verteiler (30), **dadurch gekennzeichnet**, daß der Fluidverteiler (30) auf einer Platte (20) befestigt ist, mittels derer die Kanäle (53) der Fluid-Versorgungsleitungen und die Kanäle (21,22) der Fluidverteilung mit einem ersten Abschnitt der Versorgungs- und Steuerleitungen der Arme (40) verbunden sind, der in der Unterlage (10) integriert ist, während sich der andere Teil der Leitungen in den Armen (40) erstreckt.

2. Unterlage nach Anspruch 1, **dadurch gekennzeichnet**, daß die Fluid-Versorgungsleitungen und die elektrischen Steuerleitungen mit äußeren Leitungen (60) über wenigstens einen herausziehbaren Anschluß (50) verbunden sind, welcher an der Unterlage (10) befestigt ist.

3. Unterlage nach Anspruch 2, **dadurch gekennzeichnet**, daß die Platte (20) einen elektrischen Sockel (24) aufweist zur inneren Verbindung der elektrischen Leitungen mit der Unterlage zur Steuerung von Schiebern oder Verteilern.

4. Unterlage nach einem der vorhergehenden Ansprüche, **dadurch gekennzeichnet**, daß jeder Arm (40) aufweist:
- Innenöffnungen (43), die einen Teil der Fluid-Versorgungsleitungen darstellen;
- eine zentrale Öffnung (42), in welcher elektrische Verbindungsleitungen (44) angeordnet sind, welche einen Teil der elektrischen Steuerleitungen darstellen;
- und Außenbuchsen (55), in welchen elektrische Verbindungsleitungen (56) vorgesehen sind, welche einen Teil der elektrischen Steuerleitungen darstellen.
